# EUROPEAN PATENT APPLICATION

(11) **EP 4 509 336 A1**
(43) Date of publication of application: **19.02.2025**
(21) Application number: 23922340.7
(22) Date of filing: 25.10.2023
(51) Int. Cl.: B60H 1/00, B60N 2/56, B62D 1/06

(54) **VEHICLE CONTROL METHOD, VEHICLE HEAD UNIT, MAIN CONTROLLER, AND STORAGE MEDIUM**

(30) Priority: 17.02.2023 CN 202310131849
(71) Applicant: Ecarx (Hubei) Tech Co., Ltd., Wuhan, Hubei 430056 (CN)
(72) Inventor: YAN, Xiaofan, Wuhan, Hubei 430056 (CN); CHENG, Xixi, Wuhan, Hubei 430056 (CN); MIN, Jian, Wuhan, Hubei 430056 (CN); SHANG, Yanping, Wuhan, Hubei 430056 (CN); JIANG, Yu, Wuhan, Hubei 430056 (CN)
(74) Representative: Ipside
(86) International application number: PCT/CN2023/126334
(87) International publication number: WO 2024/169223

(57) **Abstract**

A vehicle control method, including: in response to an extreme-speed temperature adjustment instruction, generating a temperature adjustment instruction of a vehicle temperature adjustment system, and sending the temperature adjustment instruction to a master controller, where the temperature adjustment instruction of the vehicle temperature adjustment system is used for causing the master controller to control the vehicle temperature adjustment system to perform a corresponding temperature adjustment operation, and to generate an interface adjustment instruction after completion of the temperature adjustment operation; and receiving the interface adjustment instruction sent by the master controller, and displaying, in response to the interface adjustment instruction, a corresponding vehicle device temperature adjustment interface; where the vehicle device temperature adjustment interface includes a vehicle device interface theme corresponding to the extreme-speed temperature adjustment instruction. A vehicle device, a master controller, and a storage medium are further disclosed. The method is used for solving a technical problem of low efficiency of temperature adjustment in a complex vehicle device system.

## Description

The present application claims priority to Chinese Patent Application No. 202310131849.1 filed with the China National Intellectual Property Administration on February 17, 2023, the entire contents of which are incorporated herein by reference.

### TECHNICAL FIELD

Embodiments of the present application relate to the field of computers and, for example, to a vehicle control method, a vehicle device, a master controller, and a storage medium.

### BACKGROUND

A vehicle air conditioning system is a system that realizes cooling, heating, ventilation, and air purification of air in a vehicle cabin, and the system can provide a comfortable riding environment for passengers, reduce fatigue intensity of drivers, and improve driving safety.

With the improvement of vehicle intelligence, vehicle device systems are becoming increasingly complex, and when a user utilize a vehicle device to adjust temperature in a vehicle, a variety of related parameters are generally required to be set, causing low efficiency in temperature adjustment.

### SUMMARY

The present application provides a vehicle control method, a vehicle device, a master controller, and a storage medium, for solving a technical problem of low efficiency of temperature adjustment in a complex vehicle device system.

In a first aspect, the present application provides a vehicle control method, applied to a vehicle device, and including:
in response to an extreme-speed temperature adjustment instruction, generating a temperature adjustment instruction of a vehicle temperature adjustment system, and sending the temperature adjustment instruction to a master controller; where the temperature adjustment instruction of the vehicle temperature adjustment system is used for causing the master controller to control the vehicle temperature adjustment system to perform a corresponding temperature adjustment operation, and to generate an interface adjustment instruction after completion of the temperature adjustment operation; and
receiving the interface adjustment instruction sent by the master controller, and displaying, in response to the interface adjustment instruction, a corresponding vehicle device temperature adjustment interface; where the vehicle device temperature adjustment interface includes a vehicle device interface theme corresponding to the extreme-speed temperature adjustment instruction.

Optionally, the displaying, in response to the interface adjustment instruction, the corresponding vehicle device temperature adjustment interface includes:
displaying, in response to the interface adjustment instruction, an air conditioner application interface; where the air conditioner application interface includes a navigation bar switching menu interface, a temperature adjustment interface, and a system information interface, and the navigation bar switching menu interface and the temperature adjustment interface apply the vehicle device interface theme corresponding to the extreme-speed temperature adjustment instruction, and a target icon in the system information interface applies the vehicle device interface theme corresponding to the extreme-speed temperature adjustment instruction.

Optionally, the method further includes:
displaying, in response to the interface adjustment instruction, a temperature adjustment decoration interface; where the temperature adjustment decoration interface covers the air conditioner application interface, the temperature adjustment decoration interface includes temperature adjustment decoration elements, and the temperature adjustment decoration elements are correspondingly displayed in the temperature adjustment decoration interface according to an order of preset display positions.

Optionally, the extreme-speed temperature adjustment instruction includes: an extreme-speed temperature reduction instruction; and the in response to the extreme-speed temperature adjustment instruction, generating the temperature adjustment instruction for the vehicle temperature adjustment system, and sending the temperature adjustment instruction to a master controller, includes:
in response to the extreme-speed temperature reduction instruction, activating an extreme-speed temperature reduction function, generating an air conditioner extreme-speed temperature reduction instruction, a seat ventilation instruction, and a vehicle window state adjustment instruction, and sending the air conditioner extreme-speed temperature reduction instruction, the seat ventilation instruction, and the vehicle window state adjustment instruction to the master controller;
where the air conditioner extreme-speed temperature reduction instruction is used for causing the master controller to control an air conditioner to be in an activated state, and to adjust an air conditioner temperature adjustment related parameter to a first preset air conditioner temperature adjustment related parameter;
the seat ventilation instruction is used for causing the master controller to adjust a ventilation level of a seat to a first preset level;
the vehicle window state adjustment instruction is used for causing the master controller to adjust a state of a target vehicle window to a first preset state; and
the temperature adjustment instruction of the vehicle temperature adjustment system includes the air conditioner extreme-speed temperature reduction instruction, the seat ventilation instruction, and the vehicle window state adjustment instruction.

Optionally, the extreme-speed temperature adjustment instruction includes: an extreme-speed temperature increase instruction; and the in response to the extreme-speed temperature adjustment instruction, generating the temperature adjustment instruction of the vehicle temperature adjustment system, and sending the temperature adjustment instruction to a master controller includes:
in response to the extreme-speed temperature increase instruction, activating an extreme-speed temperature increase function, generating an air conditioner extreme-speed temperature increase instruction, a seat heating instruction, a vehicle window state adjustment instruction, and a steering wheel heating instruction, and sending the air conditioner extreme-speed temperature increase instruction, the seat heating instruction, the vehicle window state adjustment instruction, and the steering wheel heating instruction to the master controller;
where the air conditioner extreme-speed temperature increase instruction is used for causing the master controller to control an air conditioner to be in an activated state, and to adjust an air conditioner temperature adjustment related parameter to a second preset air conditioner temperature adjustment related parameter;
the seat heating instruction is used for causing the master controller to adjust a heating level of a seat to a second preset level;
the vehicle window state adjustment instruction is used for causing the master controller to adjust a state of a target vehicle window to a second preset state;
the steering wheel heating instruction is used for causing the master controller to adjust a heating level of a steering wheel to a third preset level; and
the temperature adjustment instruction of the vehicle temperature adjustment system includes the air conditioner extreme-speed temperature increase instruction, the seat heating instruction, the vehicle window state adjustment instruction, and the steering wheel heating instruction.

Optionally, after the displaying the corresponding vehicle device temperature adjustment interface, the method further includes:
in a case that a vehicle meets an extreme-speed temperature adjustment exit condition, stopping displaying a current vehicle device temperature adjustment interface.

Optionally, the stopping displaying the current vehicle device temperature adjustment interface in the case that the vehicle meets an extreme-speed temperature adjustment exit condition includes:
stopping displaying the current vehicle device temperature adjustment interface in response to an adjustment instruction of an extreme-speed temperature adjustment;
where the adjustment instruction of the extreme-speed temperature adjustment includes an extreme-speed temperature adjustment button triggering instruction, or a maximum defrosting function activation instruction, a cabin target temperature adjustment instruction, an air volume adjustment instruction, and an air conditioner temperature adjustment function shutdown instruction.

In a second aspect, the present application provides a vehicle control method, applied to a master controller, and including:
acquiring a temperature adjustment instruction of a vehicle temperature adjustment system sent by a vehicle device; where the temperature adjustment instruction of the vehicle temperature adjustment system is an instruction generated by the vehicle device in response to an extreme-speed temperature adjustment instruction;
controlling, according to the temperature adjustment instruction of the vehicle temperature adjustment system, the vehicle temperature adjustment system to perform a corresponding temperature adjustment operation; and
after completion of the temperature adjustment operation, generating an interface adjustment instruction and sending the interface adjustment instruction to the vehicle device; where the interface adjustment instruction is used for causing the vehicle device to display a corresponding vehicle device temperature adjustment interface; and the vehicle device temperature adjustment interface includes a vehicle device interface theme corresponding to the extreme-speed temperature adjustment instruction.

Optionally, the controlling, according to the temperature adjustment instruction of the vehicle temperature adjustment system, the vehicle temperature adjustment system to perform a corresponding temperature adjustment operation includes:
acquiring an air conditioner extreme-speed temperature reduction instruction, a seat ventilation instruction, and a vehicle window state adjustment instruction from the temperature adjustment instruction for the vehicle temperature adjustment system;
in response to the air conditioner extreme-speed temperature reduction instruction, controlling an air conditioner to be in an activated state, and adjusting an air conditioner temperature adjustment related parameter to a first preset air conditioner temperature adjustment related parameter;
in response to the seat ventilation instruction, adjusting a ventilation level of a seat to a first preset level; and
in response to the vehicle window state adjustment instruction, adjusting a state of a target vehicle window to a first preset state.

Optionally, the in response to the air conditioner extreme-speed temperature reduction instruction, controlling the air conditioner to be in an activated state, and adjusting the air conditioner temperature adjustment related parameter to the first preset air conditioner temperature adjustment related parameter includes:
in response to the air conditioner extreme-speed temperature reduction instruction, controlling the air conditioner to be in the activated state;
adjusting target temperature of a front cabin and a rear cabin to lowest temperature;
adjusting an air volume of the front cabin and the rear cabin to a maximum air volume;
adjusting an air blowing mode to a mode of an air flowing direction toward a face and a concentrated airflow direction; and
starting a refrigeration function and an internal circulation function of the air conditioner.

Optionally, the controlling, according to the temperature adjustment instruction of the vehicle temperature adjustment system, the vehicle temperature adjustment system to perform the corresponding temperature adjustment operation includes:
acquiring an air conditioner extreme-speed temperature increase instruction, a seat heating instruction, a vehicle window state adjustment instruction, and a steering wheel heating instruction from the temperature adjustment instruction of the vehicle temperature adjustment system;
in response to the air conditioner extreme-speed temperature increase instruction, controlling an air conditioner to be in the activated state, and adjusting an air conditioner temperature adjustment related parameter to a second preset air conditioner temperature adjustment related parameter;
in response to the seat heating instruction, adjusting a heating level of the seat to a second preset level;
in response to the vehicle window state adjustment instruction, adjusting the state of the target vehicle window to a second preset state; and
in response to the steering wheel heating instruction, adjusting a heating level of a steering wheel to a third preset level.

Optionally, the in response to the air conditioner extreme-speed temperature increase instruction, controlling the air conditioner to be in the activated state, and adjusting the air conditioner temperature adjustment related parameter to the second preset air conditioner temperature adjustment related parameter includes:
in response to the air conditioner extreme-speed temperature increase instruction, controlling the air conditioner to be in the activated state;
adjusting target temperature of a front cabin and the rear cabin to maximum temperature;
adjusting an air volume of the front cabin and the rear cabin to a maximum air volume;
adjusting an air blowing mode to a mode in which the airflow direction is a direction toward feet; and
starting a heating function and an automatic circulation function of the air conditioner.

Optionally, the method further includes:
in a case that a vehicle meets an extreme-speed temperature adjustment exit condition, generating a vehicle device temperature adjustment interface adjustment instruction, and sending the vehicle device temperature adjustment interface adjustment instruction to the vehicle device;
where the vehicle device temperature adjustment interface adjustment instruction is used for causing the vehicle device to stop displaying a current vehicle device temperature adjustment interface.

Optionally, the in the case that the vehicle meets the extreme-speed temperature adjustment exit condition, generating the vehicle device temperature adjustment interface adjustment instruction, and sending the vehicle device temperature adjustment interface adjustment instruction to the vehicle device includes:
acquiring temperature in the vehicle, and in a case that the temperature continues to exceed a preset temperature range for a period of time greater than a first preset time threshold value, generating the vehicle device temperature adjustment interface adjustment instruction, and sending the vehicle device temperature adjustment interface adjustment instruction to the vehicle device;
   or
counting continuous activation time of an extreme-speed temperature adjustment function, and in a case that the continuous activation time is greater than a second preset time threshold value, generating the vehicle device temperature adjustment interface adjustment instruction, and sending the vehicle device temperature adjustment interface adjustment instruction to the vehicle device, where the extreme-speed temperature adjustment function includes an extreme-speed temperature increase function or an extreme-speed temperature reduction function.

In a third aspect, the present application provides a vehicle device, including: a processor and a memory communicatively connected to the processor;
where the memory stores a computer instruction; and
the processor, when executing the computer instruction, is configured to implement the vehicle control method involved in the first aspect.

In a fourth aspect, the present application provides a master controller, including: a processor and a memory communicatively connected to the processor;
where the memory stores a computer instruction; and
the processor, when executing the computer instruction, is configured to implement the vehicle control method involved in the second aspect.

In a fifth aspect, the present application provides a computer readable storage medium storing a computer instruction which, when executed by a processor, is used for implementing the vehicle control method involved in the first aspect, or the second aspect.

### BRIEF DESCRIPTION OF DRAWINGS

Drawings herein are incorporated into and form a part of the description, show embodiments consistent with the present application, and are used in combination with the description to explain the present application.
FIG. 1 is a flow schematic diagram of a vehicle control method provided by the present application according to an exemplary embodiment.
FIG. 2 is a schematic diagram of a vehicle device interface provided by the present application according to an exemplary embodiment.
FIG. 3 is a flow schematic diagram of a vehicle control method provided by the present application according to another exemplary embodiment.
FIG. 4 is a flow schematic diagram of a vehicle control method provided by the present application according to another exemplary embodiment.
FIG. 5 is a schematic structural diagram of a vehicle device provided by the present application according to an embodiment.
FIG. 6 is a schematic structural diagram of a master controller provided by the present application according to an embodiment.

### DESCRIPTION OF EMBODIMENTS

Exemplary embodiments will be described in detail herein, examples of which are represented in the drawings. When a following description relates to the drawings, same numerals in different drawings indicate same or similar elements, unless otherwise indicated. Implementation described in following exemplary embodiments do not represent all implementations consistent with the present application. In contrast, they are merely examples of apparatuses and methods that are consistent with some aspects of the present application as detailed in the appended claims.

Terms "first", "second", "third", "fourth", etc., in the description, claims and the above-mentioned drawings of the present application are used to distinguish similar objects and are not necessarily used to describe a specific order or sequence. It should be understood that data used in this way are interchangeable where appropriate. For example, without departing from the scope herein, first information may also be referred to as second information, and similarly, the second information may be referred to as the first information.

A vehicle air conditioning system is a system which realizes cooling, heating, ventilation, and air purification of air in a cabin, and the system can provide a comfortable riding environment for passengers, reduce fatigue intensity of drivers, and improve driving safety.

With the improvement of vehicle intelligence, vehicle device systems are becoming increasingly complex, and when a user utilize a vehicle device to adjust temperature in a vehicle, a variety of related parameters are generally required to be set, which leads to low efficiency in temperature adjustment.

The present application provides a vehicle control method, a vehicle device, a master controller, and a storage medium, aiming at solving the technical problem of low efficiency of a temperature adjustment in a complex vehicle device system. In a case that a vehicle device acquires an extreme-speed temperature adjustment instruction, in response to the instruction, the vehicle device generates a temperature adjustment instruction of a vehicle temperature adjustment system and sends the temperature adjustment instruction to a master controller; the master controller acquires the vehicle temperature adjustment instruction of the vehicle temperature adjustment system sent by the vehicle device, controls the vehicle temperature adjustment system to perform a corresponding temperature adjustment operation according to the vehicle temperature adjustment instruction of the vehicle temperature adjustment system, and generates an interface adjustment instruction after completion of the temperature adjustment operation; and the vehicle device receives the interface adjustment instruction sent by the master controller, and displays a corresponding vehicle device temperature adjustment interface in response to the interface adjustment instruction, where the vehicle device temperature adjustment interface includes a vehicle device interface theme corresponding to the extreme-speed temperature adjustment instruction. Thus, the master controller performs the corresponding temperature adjustment operation according to the extreme-speed temperature adjustment instruction received by the vehicle device. The vehicle device not only realizes a one-click temperature adjustment according to a temperature adjustment target, which improves temperature adjustment efficiency of a complex vehicle device system, but also improves a user's immersive experience of temperature adjustment by applying the vehicle device interface theme corresponding to the extreme-speed temperature adjustment instruction in the vehicle device temperature adjustment interface.

A scenario in which the vehicle control method proposed in the present application is applied is a vehicle, where the vehicle includes a vehicle device and a master controller, the vehicle device and the master controller are connected, the vehicle device is configured to perform a human-computer interaction with a passenger, i.e., to receive a user's instruction and displays corresponding information according to the user's instruction, and the master controller is configured to control operation of the entire vehicle. In a case that the vehicle device acquires a vehicle control instruction, the vehicle device will send the instruction to the master controller to enable the master controller to operate according to the instruction, and at the same time, the vehicle device will display an operation result of the master controller or a related parameter in an operation process of the master controller on a screen of the vehicle device.

When the user performs a temperature adjustment on the vehicle, the user may click an extreme-speed temperature adjustment button on the vehicle device to enable the vehicle device to generate an extreme-speed temperature adjustment instruction, and in response to the extreme-speed temperature adjustment instruction, the vehicle device generates the temperature adjustment instruction of the vehicle temperature adjustment system and sends the temperature adjustment instruction to the master controller, and the master controller controls the vehicle temperature adjustment system to perform the corresponding temperature adjustment operation according to the temperature adjustment instruction, to realize one-click control of the user for an extreme-speed temperature adjustment of the vehicle.

After completion of the temperature adjustment operation, the master controller generates an interface adjustment instruction and sends the interface adjustment instruction to the vehicle device. In response to the interface adjustment instruction, the vehicle device displays the corresponding vehicle device temperature adjustment interface, and the vehicle device temperature adjustment interface includes the vehicle device interface theme corresponding to the extreme-speed temperature adjustment instruction, to enable the user not only to keep abreast of the vehicle temperature adjustment, but also to increase an immersive experience of the extreme-speed temperature adjustment.

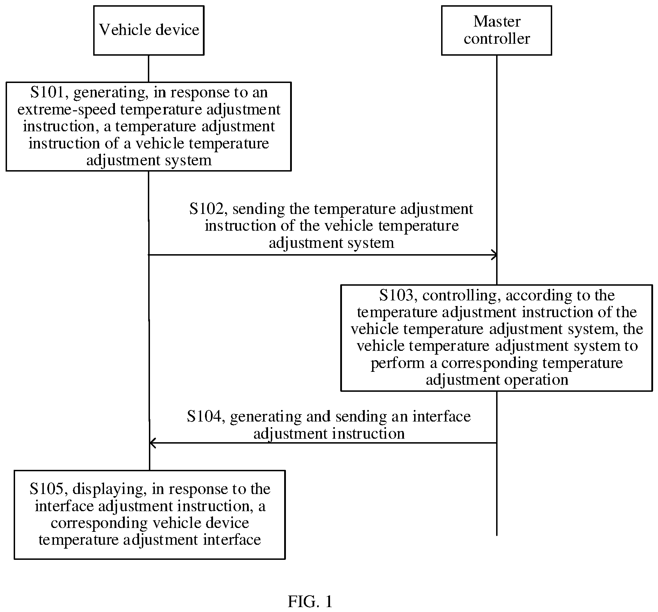

FIG. 1 is a flow schematic diagram of a vehicle control method provided by the present application according to an exemplary embodiment, and as shown in FIG. 1, the vehicle control method includes the following contents.

S101, in response to an extreme-speed temperature adjustment instruction, generating, by a vehicle device, a temperature adjustment instruction of a vehicle temperature adjustment system.

The extreme-speed temperature adjustment instruction is an instruction generated after a user triggers an extreme-speed temperature adjustment function of the vehicle device. In an embodiment, the user may trigger the extreme-speed temperature adjustment function by touching an extreme-speed temperature adjustment icon on a vehicle device interface, in another embodiment, the user may trigger the extreme-speed temperature adjustment function by speaking a voice containing a keyword of "extreme-speed temperature adjustment", and in another embodiment, the user may trigger the extreme-speed temperature adjustment function by utilizing a terminal wirelessly connected to the vehicle device.

S102, sending, by the vehicle device, the temperature adjustment instruction of the vehicle temperature adjustment system to the master controller.

S103, controlling, by the master controller, the vehicle temperature adjustment system to perform a corresponding temperature adjustment operation according to the temperature adjustment instruction of the vehicle temperature adjustment system.

The master controller acquires an extreme-speed temperature adjustment process corresponding to the instruction locally in the vehicle according to the temperature adjustment instruction of the vehicle temperature adjustment system, and controls a corresponding vehicle assembly to perform the corresponding temperature adjustment operation according to the process.

After completion of the above temperature adjustment operation, proceed to step S104.

S104, generating, by the master controller, an interface adjustment instruction, and sending, by the master controller, the interface adjustment instruction to the vehicle device.

S105, displaying, by the vehicle device, a corresponding vehicle device temperature adjustment interface in response to the interface adjustment instruction.

The vehicle device temperature adjustment interface includes a vehicle device interface theme corresponding to the extreme-speed temperature adjustment instruction.

Before the vehicle device acquires the extreme-speed temperature adjustment instruction, the vehicle device adopts a default vehicle device interface theme; and after the vehicle device acquires the extreme-speed temperature adjustment instruction and causes the master controller to perform the corresponding temperature adjustment operation according to the instruction, the vehicle device adjusts the vehicle interface theme.

In the above technical solutions, in a case that the vehicle device receives the extreme-speed temperature adjustment instruction, in response to the instruction, the vehicle device generates the temperature adjustment instruction of the vehicle temperature adjustment system and sends the temperature adjustment instruction to the master controller, where the temperature adjustment instruction of the vehicle temperature adjustment system is used for causing the master controller to control the vehicle temperature adjustment system to perform the corresponding temperature adjustment operation, and to generate the interface adjustment instruction after the completion of the temperature adjustment operation; the vehicle device receives the interface adjustment instruction sent by the master controller, and displays the corresponding vehicle device temperature adjustment interface in response to the interface adjustment instruction, where the vehicle device temperature adjustment interface includes the vehicle device interface theme corresponding to the extreme-speed temperature adjustment instruction. The vehicle device not only realizes a one-click temperature adjustment according to a temperature adjustment target, but also improves a user's immersive experience of temperature adjustment by applying the vehicle device interface theme corresponding to the extreme-speed temperature adjustment instruction in the vehicle device temperature adjustment interface.

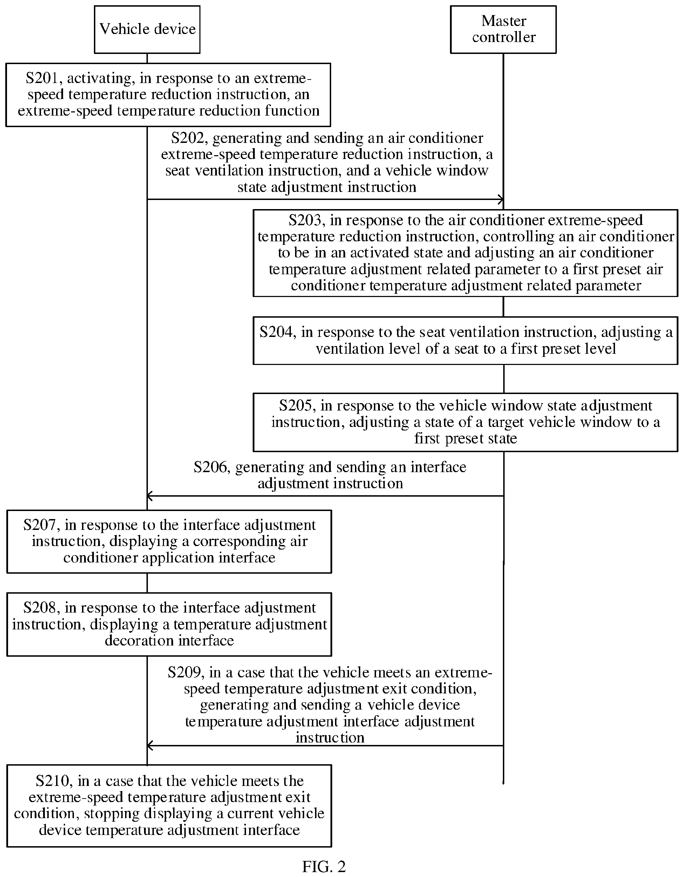

FIG. 2 is a flow schematic diagram of a vehicle control method provided by the present application according to another exemplary embodiment, and as shown in FIG. 2, the vehicle control method includes the following contents.

S201, in response to an extreme-speed temperature reduction instruction, activating, by a vehicle device, an extreme-speed temperature reduction function.

After a vehicle activates the extreme-speed temperature reduction function, a temperature adjustment instruction of a vehicle temperature adjustment system is generated, where the temperature adjustment instruction of the vehicle temperature adjustment system includes an air conditioner extreme-speed temperature reduction instruction, a seat ventilation instruction, and a vehicle window state adjustment instruction.

S202, generating, by the vehicle device, an air conditioner extreme-speed temperature reduction instruction, a seat ventilation instruction, and a vehicle window state adjustment instruction, and sending, by the vehicle device, the air conditioner extreme-speed temperature reduction instruction, the seat ventilation instruction, and the vehicle window state adjustment instruction to a master controller.

S203, in response to the air conditioner extreme-speed temperature reduction instruction, controlling, by the master controller, an air conditioner to be in an activated state and adjusting, by the master controller, an air conditioner temperature adjustment related parameter to a first preset air conditioner temperature adjustment related parameter.

In a case that the master controller adjusts the air conditioner temperature adjustment related parameter to the first preset air conditioner temperature adjustment related parameter, the master controller adjusts target temperature of a front cabin and a rear cabin to lowest temperature, adjusts an air volume of the front cabin and the rear cabin to a maximum air volume, adjusts an air blowing mode to a mode of an air flowing direction toward a face and a concentrated airflow direction, and starts a refrigeration function and an internal circulation function of the air conditioner.

S204, in response to the seat ventilation instruction, adjusting, by the master controller, a ventilation level of a seat to a first preset level.

In an embodiment, the master controller adjusts the ventilation level of the seat to a highest ventilation level for rapid cooling of the seat.

S205, in response to the vehicle window state adjustment instruction, adjusting, by the master controller, a state of a target vehicle window to a first preset state.

In an embodiment, the master controller closes all the vehicle windows in the vehicle.

S206, generating, by the master controller, an interface adjustment instruction, and sending, by the master controller, the interface adjustment instruction to the vehicle device.

After completion of the above temperature adjustment operation, the master controller generates the interface adjustment instruction and sends the interface adjustment instruction to the vehicle device.

S207, in response to the interface adjustment instruction, displaying, by the vehicle device, a corresponding air conditioner application interface.

The vehicle device temperature adjustment interface displayed by the vehicle device includes the air conditioner application interface, where the air conditioner application interface includes interfaces in which all operable controls in the interface are located, i.e., a navigation bar switching menu interface, a temperature adjustment interface, and a system information interface, where the navigation bar switching interface includes a navigation bar switching menu, the temperature adjustment interface includes a temperature scroll bar, and the system information interface includes a basic function switching button of the vehicle.

The navigation bar switching menu interface and the temperature adjustment interface apply a vehicle device interface theme corresponding to an extreme-speed temperature adjustment instruction, and a target icon in the system information interface applies the vehicle device interface theme corresponding to the extreme-speed temperature adjustment instruction. In an embodiment, the vehicle device interface theme applied by the air conditioner application interface is a cool tone theme, e.g., a blue-themed vehicle device interface.

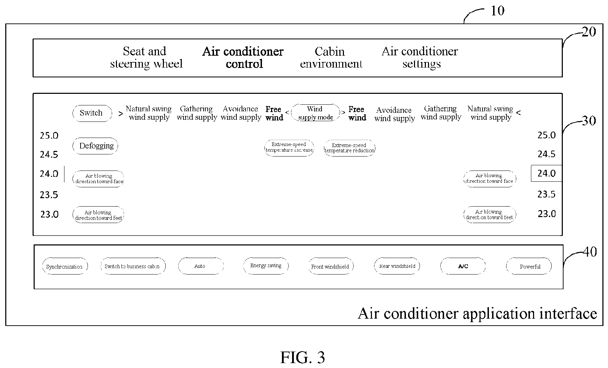

The vehicle device temperature adjustment interface is shown in FIG. 3. An air conditioner application interface 10 includes a navigation bar switching menu interface 20, a temperature adjustment interface 30, and a system information interface 40, where the navigation bar switching menu interface 20 includes a first-level navigation bar switching menus that can be selected for switching, including: seat and steering wheel, air conditioner control, cabin environment, and air conditioner settings. In a case that the air conditioner control option is selected, the temperature adjustment interface 30 displays air conditioner control information of a front row, including: temperature adjustment information of driver's compartment and a compartment in the same row as the driver, an air blowing direction, and a wind supply mode. Furthermore, the temperature adjustment interface 30 further includes buttons for extreme-speed temperature increase and extreme-speed temperature reduction, and after a user triggers one of the buttons for extreme-speed temperature adjustment, the wind supply mode, temperature, and a wind supply direction will be displayed correspondingly according to information fed back from the master controller.

S208, in response to the interface adjustment instruction, displaying, by the vehicle device, a temperature adjustment decoration interface.

The temperature adjustment decoration interface covers the air conditioner application interface, the temperature adjustment decoration interface includes temperature adjustment decoration elements, and the temperature adjustment decoration elements are correspondingly displayed in the temperature adjustment decoration interface according to an order of preset display positions.

In response to the extreme-speed temperature reduction instruction, the temperature adjustment decoration elements displayed by the vehicle device includes a plurality of snowflakes, and the plurality of snowflakes move irregularly on the air conditioner application interface. The temperature adjustment decoration elements do not affect that the user acquisition of information on the air conditioner application interface.

S209, in a case that the vehicle meets an extreme-speed temperature adjustment exit condition, generating, by the master controller, a vehicle device temperature adjustment interface adjustment instruction, and sending, by the master controller, the vehicle device temperature adjustment interface adjustment instruction to the vehicle device.

In a process of determining whether the vehicle meets the extreme-speed temperature adjustment exit condition,
in one case, the master controller acquires temperature in the vehicle, and in a case that the temperature continues to exceed a preset temperature range for a period of time greater than a first preset time threshold value, generates the vehicle device temperature adjustment interface adjustment instruction, and sends the vehicle device temperature adjustment interface adjustment instruction to the vehicle device.

Alternatively, continuous activation time of an extreme-speed temperature adjustment function is counted, and in a case that the continuous activation time is greater than a second preset time threshold value, the vehicle device temperature adjustment interface adjustment instruction is generated and sent to the vehicle device, where the extreme-speed temperature adjustment function includes an extreme-speed temperature increase function or an extreme-speed temperature reduction function.

S210, in a case that the vehicle meets the extreme-speed temperature adjustment exit condition, stopping, by the vehicle device, displaying a current vehicle device temperature adjustment interface.

In one case, the vehicle device stops displaying the current vehicle device temperature adjustment interface in response to an adjustment instruction of an extreme-speed temperature adjustment, where the adjustment instruction of the extreme-speed temperature adjustment includes an extreme-speed temperature adjustment button triggering instruction, or a maximum defrosting function activation instruction, a cabin target temperature adjustment instruction, an air volume adjustment instruction, and an air conditioner temperature adjustment function shutdown instruction.

In the above technical solutions, the vehicle device, in response to the extreme-speed temperature reduction instruction, configures the air conditioner temperature adjustment related parameter, a related parameter of the ventilation level of the seat, and a state parameter of the vehicle window at the same time, which realizes that the air conditioner, the seat, and the vehicle window within the entire vehicle are linked to participate in temperature reduction, to ensure that the temperature in the vehicle can be reduced to an appropriate temperature as soon as possible.

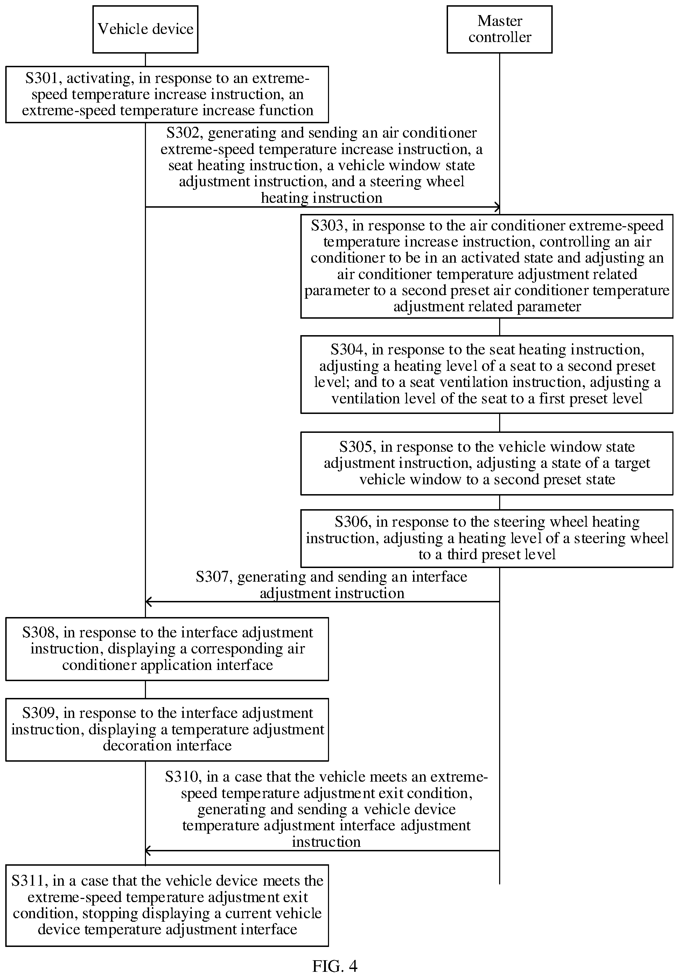

FIG. 4 is a flow schematic diagram of a vehicle control method provided by the present application according to another exemplary embodiment, and as shown in FIG. 4, the vehicle control method includes the following contents.

S301, in response to an extreme-speed temperature increase instruction, activating, by a vehicle device, an extreme-speed temperature increase function.

After activating the extreme-speed temperature increase function by the vehicle is completed, the vehicle device generates a temperature adjustment instruction of a vehicle temperature adjustment system, where the temperature adjustment instruction of the vehicle temperature adjustment system includes an air conditioner extreme-speed temperature increase instruction, a seat heating instruction, a vehicle window state adjustment instruction, and a steering wheel heating instruction.

S302, generating, by the vehicle device, an air conditioner extreme-speed temperature increase instruction, a seat heating instruction, a vehicle window state adjustment instruction, and a steering wheel heating instruction, and sending, by the vehicle device, the air conditioner extreme-speed temperature increase instruction, the seat heating instruction, the vehicle window state adjustment instruction, and the steering wheel heating instruction to a master controller.

S303, in response to the air conditioner extreme-speed temperature increase instruction, controlling, by the master controller, an air conditioner to be in an activated state and adjusting, by the master controller, an air conditioner temperature adjustment related parameter to a second preset air conditioner temperature adjustment related parameter.

In a case that the vehicle adjusts the air conditioner temperature adjustment related parameter to the second preset air conditioner temperature adjustment related parameter, the master controller adjusts target temperature of a front cabin and a rear cabin to maximum temperature, adjusts an air volume of the front cabin and the rear cabin to a maximum air volume, adjusts an air blowing mode to a mode of an air flowing direction toward feet, and starts a heating function and an automatic circulation function of the air conditioner.

S304, in response to the seat heating instruction, adjusting, by the master controller, a heating level of a seat to a second preset level.

In an embodiment, the master controller adjusts a heating level of all seats in the vehicle to a highest heating level.

S305, in response to the vehicle window state adjustment instruction, adjusting, by the master controller, a state of a target vehicle window to a second preset state.

In an embodiment, the master controller closes all the vehicle windows in the vehicle.

S306, in response to the steering wheel heating instruction, adjusting, by the master controller, a heating level of a steering wheel to a third preset level.

In an embodiment, the master controller adjusts the heating level of the steering wheel in the vehicle to a highest heating level.

S307, generating, by the master controller, an interface adjustment instruction, and sending, by the master controller, the interface adjustment instruction to the vehicle device.

S308, in response to the interface adjustment instruction, displaying, by the vehicle device, a corresponding air conditioner application interface.

A vehicle device temperature adjustment interface displayed by the vehicle device includes an air conditioner application interface, where the air conditioner application interface includes a navigation bar switching menu interface, a temperature adjustment interface, and a system information interface, and the navigation bar switching menu interface and the temperature adjustment interface apply a vehicle device interface theme corresponding to an extreme-speed temperature adjustment instruction, and a target icon in the system information interface applies the vehicle device interface theme corresponding to the extreme-speed temperature adjustment instruction. In an embodiment, a vehicle device interface theme applied by the air conditioner application interface is a warm tone theme, e.g., a red-themed vehicle device interface.

S309, in response to the interface adjustment instruction, displaying, by the vehicle device, a temperature adjustment decoration interface.

The vehicle device temperature adjustment interface displayed by the vehicle device further includes the temperature adjustment decoration interface. The temperature adjustment decoration interface covers the air conditioner application interface, the temperature adjustment decoration interface includes temperature adjustment decoration elements, and the temperature adjustment decoration elements are correspondingly displayed in the temperature adjustment decoration interface according to an order of preset display positions.

In an embodiment, the temperature adjustment decoration elements are sparks.

In the present embodiment, by covering the temperature adjustment decoration interface containing the temperature adjustment decoration elements on the air conditioner application interface, the vehicle device displays a temperature adjustment theme at multiple levels, which increases a user's immersion in the temperature adjustment.

S310, in a case that the vehicle meets an extreme-speed temperature adjustment exit condition, generating, by the master controller, a vehicle device temperature adjustment interface adjustment instruction, and sending, by the master controller, the vehicle device temperature adjustment interface adjustment instruction to the vehicle device.

The extreme-speed temperature adjustment exit condition met by the vehicle includes that: temperature in the vehicle reaches 18° (capable of being calibrated) and lasts for more than 1 minute.

S311, in a case that the vehicle device meets the extreme-speed temperature adjustment exit condition, stopping, by the vehicle device, displaying a current vehicle device temperature adjustment interface.

The extreme-speed temperature adjustment exit condition met by the vehicle includes that: the user clicks on an extreme-speed temperature increase button in an activated state; an extreme-speed temperature reduction mode is entered; a maximum defrosting function is activated; a most powerful heating function of the air conditioner is enabled; temperature of any position in a cabin is adjusted from a maximum temperature value to other non-maximum temperature values; and the air volume of the front cabin or the rear cabin changes from the maximum air volume to other air volume values.

In the above technical solutions, the vehicle device, in response to the extreme-speed temperature increase instruction, configures the air conditioner temperature adjustment related parameter, a related parameter of the heating level of the seat, a state parameter of the vehicle window, and a related parameter of the heating level of the steering wheel at the same time, which realizes that the air conditioner, the seat, the vehicle window, and the steering wheel within the entire vehicle are linked to participate in temperature increase, to ensure that temperature of a plurality of components in the vehicle can be increased to appropriate temperature as soon as possible.

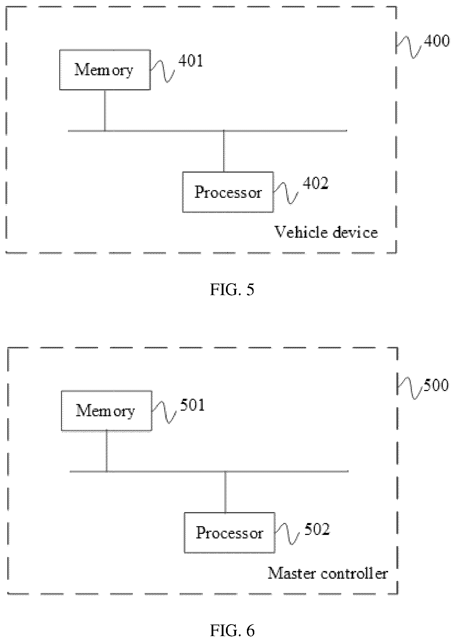

FIG. 5 is a schematic structural diagram of a vehicle device provided by the present application according to an embodiment, where the vehicle device 400 includes a memory 401 and a processor 402, where the memory 401 is configured to store a computer instruction executable by the processor. The memory 401 may include a high-speed random access memory (Random Access Memory, RAM) or may also include a non-volatile memory (Non-Volatile Memory, NVM), for example, at least one disk memory, or may also be a USB flash disk (USB flash disk, UFD), a mobile hard disk, a read only memory, a magnetic disk or an optical disk, etc.

When executing the computer instruction, the processor 402 implements a plurality of steps of the vehicle control method in the above embodiments with the vehicle device as the execution subject. For details, please refer to relevant descriptions in the above method embodiments. The processor 402 may be a central processing unit (Central Processing Unit, CPU), or may be other general-purpose processors, a digital signal processor (Digital Signal Processor, DSP), an application specific integrated circuit (Application Specific Integrated Circuit, ASIC), etc. The general-purpose processors may be microprocessors or the processors may also be any conventional processors, etc. The steps of the methods disclosed in the present invention may be directly implemented as being executed by a hardware processor, or may be implemented by a combination of hardware and software modules in the processor.

Optionally, the memory 401 described above may be either independent or integrated with the processor 402. In a case that the memory 401 is independently provided, the vehicle device 400 further includes a bus configured to connect the memory 401 to the processor 402. The bus may be an industry standard architecture (Industry Standard Architecture, ISA) bus, a peripheral component interconnect (Peripheral Component Interconnect, PCI) bus or an extended industry standard architecture (Extended Industry Standard Architecture, EISA) bus, etc. Buses may be categorized as an address bus, a data bus, a control bus, etc. For ease of representation, a bus in the drawings of the present application is not limited to only one bus or one type of bus.

FIG. 6 is a schematic structural diagram of a master controller provided by the present application according to an embodiment. The master controller 500 includes a memory 501 and a processor 502, where the memory 501 is configured to store a computer instruction executable by the processor. The memory 501 may include a high-speed random access memory (Random Access Memory, RAM) or may also include a non-volatile memory (Non-Volatile Memory, NVM), for example, at least one disk memory, or may also be a USB flash disk, a mobile hard disk, a read only memory, a magnetic disk or an optical disk, etc.

When executing the computer instruction, the processor 502 implements a plurality of steps of the vehicle control method in the above embodiments with the master controller as the execution subject. For details, please refer to relevant descriptions in the above method embodiments. The processor 502 may be a central processing unit (Central Processing Unit, CPU), or may be other general-purpose processors, a digital signal processor (Digital Signal Processor, DSP), an application specific integrated circuit (Application Specific Integrated Circuit, ASIC), etc. The general-purpose processors may be microprocessors or the processors may also be any conventional processors, etc. The steps of the methods disclosed in the present invention may be directly implemented as being executed by a hardware processor, or may be implemented by a combination of hardware and software modules in a processor.

Optionally, the memory 501 described above may be either independent or integrated with the processor 502. In a case that the memory 501 is independently provided, the master controller 500 further includes a bus configured to connect the memory 501 to the processor 502. The bus may be an industry standard architecture (Industry Standard Architecture, ISA) bus, a peripheral component interconnect (Peripheral Component Interconnect, PCI) bus or an extended industry standard architecture (Extended Industry Standard Architecture, EISA) bus, etc. Buses may be categorized as an address bus, a data bus, a control bus, etc. For ease of representation, a bus in the drawings of the present application is not limited to only one bus or one type of bus.

The embodiments of the present application further provide a computer readable storage medium storing a computer instruction which, when executed by a processor, implements a plurality of steps in the vehicle control methods in the above embodiments.

The embodiments of the present application further provide a computer program product including a computer instruction which, when executed by a processor, implements a plurality of steps in the vehicle control methods in the above embodiments.

## Claims

1. A vehicle control method, applied to a vehicle device, and comprising:
in response to an extreme-speed temperature adjustment instruction, generating a temperature adjustment instruction of a vehicle temperature adjustment system, and sending the temperature adjustment instruction to a master controller; wherein the temperature adjustment instruction of the vehicle temperature adjustment system is used for causing the master controller to control the vehicle temperature adjustment system to perform a corresponding temperature adjustment operation, and to generate an interface adjustment instruction after completion of the temperature adjustment operation; and
receiving the interface adjustment instruction sent by the master controller, and displaying, in response to the interface adjustment instruction, a corresponding vehicle device temperature adjustment interface; wherein the vehicle device temperature adjustment interface comprises a vehicle device interface theme corresponding to the extreme-speed temperature adjustment instruction.

2. The method according to claim 1, wherein the displaying, in response to the interface adjustment instruction, the corresponding vehicle device temperature adjustment interface comprises:
displaying, in response to the interface adjustment instruction, an air conditioner application interface; wherein the air conditioner application interface comprises a navigation bar switching menu interface, a temperature adjustment interface, and a system information interface, and the navigation bar switching menu interface and the temperature adjustment interface apply the vehicle device interface theme corresponding to the extreme-speed temperature adjustment instruction, and a target icon in the system information interface applies the vehicle device interface theme corresponding to the extreme-speed temperature adjustment instruction.

3. The method according to claim 2, further comprising:
displaying, in response to the interface adjustment instruction, a temperature adjustment decoration interface; wherein the temperature adjustment decoration interface covers the air conditioner application interface, the temperature adjustment decoration interface comprises temperature adjustment decoration elements, and the temperature adjustment decoration elements are correspondingly displayed in the temperature adjustment decoration interface according to a preset display position.

4. The method according to claim 1, wherein the extreme-speed temperature adjustment instruction comprises: an extreme-speed temperature reduction instruction; and the in response to the extreme-speed temperature adjustment instruction, generating the temperature adjustment instruction of the vehicle temperature adjustment system, and sending the temperature adjustment instruction to the master controller comprises:
in response to the extreme-speed temperature reduction instruction, activating an extreme-speed temperature reduction function, generating an air conditioner extreme-speed temperature reduction instruction, a seat ventilation instruction, and a vehicle window state adjustment instruction, and sending the air conditioner extreme-speed temperature reduction instruction, the seat ventilation instruction, and the vehicle window state adjustment instruction to the master controller;
wherein the air conditioner extreme-speed temperature reduction instruction is used for causing the master controller to control an air conditioner to be in an activated state, and to adjust an air conditioner temperature adjustment related parameter to a first preset air conditioner temperature adjustment related parameter;
the seat ventilation instruction is used for causing the master controller to adjust a ventilation level of a seat to a first preset level;
the vehicle window state adjustment instruction is used for causing the master controller to adjust a state of a target vehicle window to a first preset state; and
the temperature adjustment instruction of the vehicle temperature adjustment system comprises the air conditioner extreme-speed temperature reduction instruction, the seat ventilation instruction, and the vehicle window state adjustment instruction.

5. The method according to claim 1, wherein the extreme-speed temperature adjustment instruction comprises: an extreme-speed temperature increase instruction; and the in response to the extreme-speed temperature adjustment instruction, generating the temperature adjustment instruction of the vehicle temperature adjustment system, and sending the temperature adjustment instruction to the master controller comprises:
in response to the extreme-speed temperature increase instruction, activating an extreme-speed temperature increase function, generating an air conditioner extreme-speed temperature increase instruction, a seat heating instruction, a vehicle window state adjustment instruction, and a steering wheel heating instruction, and sending the air conditioner extreme-speed temperature increase instruction, the seat heating instruction, the vehicle window state adjustment instruction, and the steering wheel heating instruction to the master controller;
wherein the air conditioner extreme-speed temperature increase instruction is used for causing the master controller to control an air conditioner to be in an activated state, and to adjust an air conditioner temperature adjustment related parameter to a second preset air conditioner temperature adjustment related parameter;
the seat heating instruction is used for causing the master controller to adjust a heating level of a seat to a second preset level;
the vehicle window state adjustment instruction is used for causing the master controller to adjust a state of a target vehicle window to a second preset state;
the steering wheel heating instruction is used for causing the master controller to adjust a heating level of a steering wheel to a third preset level; and
the temperature adjustment instruction of the vehicle temperature adjustment system comprises the air conditioner extreme-speed temperature increase instruction, the seat heating instruction, the vehicle window state adjustment instruction, and the steering wheel heating instruction.

6. The method according to claim 1, after the displaying the corresponding vehicle device temperature adjustment interface, the method further comprises:
in a case that a vehicle meets an extreme-speed temperature adjustment exit condition, stopping displaying a current vehicle device temperature adjustment interface.

7. The method according to claim 6, wherein the stopping displaying the current vehicle device temperature adjustment interface in the case that the vehicle meets the extreme-speed temperature adjustment exit condition comprises:
stopping displaying the current vehicle device temperature adjustment interface in response to an adjustment instruction of an extreme-speed temperature adjustment;
wherein the adjustment instruction of the extreme-speed temperature adjustment comprises an extreme-speed temperature adjustment button triggering instruction, or a maximum defrosting function activation instruction, a cabin target temperature adjustment instruction, an air volume adjustment instruction, and an air conditioner temperature adjustment function shutdown instruction.

8. A vehicle control method, applied to a master controller, and comprising:
acquiring a temperature adjustment instruction of a vehicle temperature adjustment system sent by a vehicle device; wherein the temperature adjustment instruction of the vehicle temperature adjustment system is an instruction generated by the vehicle device in response to an extreme-speed temperature adjustment instruction;
controlling, according to the temperature adjustment instruction of the vehicle temperature adjustment system, the vehicle temperature adjustment system to perform a corresponding temperature adjustment operation; and
after completion of the temperature adjustment operation, generating an interface adjustment instruction and sending the interface adjustment instruction to the vehicle device; wherein the interface adjustment instruction is used for causing the vehicle device to display a corresponding vehicle device temperature adjustment interface; and the vehicle device temperature adjustment interface comprises a vehicle device interface theme corresponding to the extreme-speed temperature adjustment instruction.

9. The method according to claim 8, wherein the controlling, according to the temperature adjustment instruction of the vehicle temperature adjustment system, the vehicle temperature adjustment system to perform the corresponding temperature adjustment operation comprises:
acquiring an air conditioner extreme-speed temperature reduction instruction, a seat ventilation instruction, and a vehicle window state adjustment instruction from the temperature adjustment instruction of the vehicle temperature adjustment system;
in response to the air conditioner extreme-speed temperature reduction instruction, controlling an air conditioner to be in an activated state, and adjusting an air conditioner temperature adjustment related parameter to a first preset air conditioner temperature adjustment related parameter;
in response to the seat ventilation instruction, adjusting a ventilation level of a seat to a first preset level; and
in response to the vehicle window state adjustment instruction, adjusting a state of a target vehicle window to a first preset state.

10. The method according to claim 9, wherein the in response to the air conditioner extreme-speed temperature reduction instruction, controlling the air conditioner to be in the activated state, and adjusting the air conditioner temperature adjustment related parameter to the first preset air conditioner temperature adjustment related parameter comprises:
in response to the air conditioner extreme-speed temperature reduction instruction, controlling the air conditioner to be in the activated state;
adjusting target temperature of a front cabin and a rear cabin to lowest temperature;
adjusting an air volume of the front cabin and the rear cabin to a maximum air volume;
adjusting an air blowing mode to a mode of an air flowing direction toward a face and a concentrated airflow direction ; and
starting a refrigeration function and an internal circulation function of the air conditioner.

11. The method according to claim 8, wherein the controlling, according to the temperature adjustment instruction of the vehicle temperature adjustment system, the vehicle temperature adjustment system to perform the corresponding temperature adjustment operation comprises:
acquiring an air conditioner extreme-speed temperature increase instruction, a seat heating instruction, a vehicle window state adjustment instruction, and a steering wheel heating instruction from the temperature adjustment instruction of the vehicle temperature adjustment system;
in response to the air conditioner extreme-speed temperature increase instruction, controlling an air conditioner to be in an activated state, and adjusting an air conditioner temperature adjustment related parameter to a second preset air conditioner temperature adjustment related parameter;
in response to the seat heating instruction, adjusting a heating level of a seat to a second preset level;
in response to the vehicle window state adjustment instruction, adjusting a state of a target vehicle window to a second preset state; and
in response to the steering wheel heating instruction, adjusting a heating level of a steering wheel to a third preset level.

12. The method according to claim 11, wherein the in response to the air conditioner extreme-speed temperature increase instruction, controlling the air conditioner to be in the activated state, and adjusting the air conditioner temperature adjustment related parameter to the second preset air conditioner temperature adjustment related parameter comprises:
in response to the air conditioner extreme-speed temperature increase instruction, controlling the air conditioner to be in the activated state;
adjusting target temperature of a front cabin and a rear cabin to maximum temperature;
adjusting an air volume of the front cabin and the rear cabin to a maximum air volume;
adjusting an air blowing mode to a mode in which an airflow direction is a direction toward feet; and
starting a heating function and an automatic circulation function of the air conditioner.

13. The method according to claim 8, further comprising:
in a case that a vehicle meets an extreme-speed temperature adjustment exit condition, generating a vehicle device temperature adjustment interface adjustment instruction, and sending the vehicle device temperature adjustment interface adjustment instruction to the vehicle device;
wherein the vehicle device temperature adjustment interface adjustment instruction is used for causing the vehicle device to stop displaying a current vehicle device temperature adjustment interface.

14. The method according to claim 13, wherein the in the case that the vehicle meets the extreme-speed temperature adjustment exit condition, generating the vehicle device temperature adjustment interface adjustment instruction, and sending the vehicle device temperature adjustment interface adjustment instruction to the vehicle device comprises:
acquiring temperature in the vehicle, and in a case that the temperature continues to exceed a preset temperature range for a period of time greater than a first preset time threshold value, generating the vehicle device temperature adjustment interface adjustment instruction, and sending the vehicle device temperature adjustment interface adjustment instruction to the vehicle device;
or
counting continuous activation time of an extreme-speed temperature adjustment function, and in a case that the continuous activation time is greater than a second preset time threshold value, generating the vehicle device temperature adjustment interface adjustment instruction, and sending the vehicle device temperature adjustment interface adjustment instruction to the vehicle device, wherein the extreme-speed temperature adjustment function comprises an extreme-speed temperature increase function or an extreme-speed temperature reduction function.

15. A vehicle device comprising: a processor and a memory communicatively connected to the processor;
wherein the memory stores a computer executable instruction; and
the processor, when executing the computer executable instruction, is configured to implement the vehicle control method according to any one of claims 1 to 7.

16. A master controller comprising: a processor and a memory communicatively connected to the processor;
wherein the memory stores a computer executable instruction; and
the processor, when executing the computer executable instruction, is configured to implement the vehicle control method according to any one of claims 8 to 14.

17. A computer readable storage medium storing a computer instruction which, when executed by a processor, is used for implementing the vehicle control method according to any one of claims 1 to 7, or according to any one of claims 8 to 14.
